Europäisches Patentamt

European Patent Office

Office européen des brevets

(19)

(11) Publication number : **0 463 721 A2**

# (12) EUROPEAN PATENT APPLICATION

(21) Application number : **91303836.0**

(22) Date of filing : **26.04.91**

(51) Int. Cl.⁵ : **G06F 15/80**

(30) Priority : **30.04.90 SE 9001556**
**17.04.91 CA 2040659**

(43) Date of publication of application :
**02.01.92 Bulletin 92/01**

(84) Designated Contracting States :
**BE DE FR GB IT NL**

(71) Applicant : **GENNUM CORPORATION**
**P.O. Box 489, Station A**
**Burlington, Ontario L7R 3Y3 (CA)**

(72) Inventor : **Chen, Keping**
**505 Locust Street, Apt. 202**
**Burlington, Ontario L7S 1X6 (CA)**
Inventor : **Svensson, Christer M.**
**Anders Vag 33**
**S-590 60 Ljunsbro (SE)**

(74) Representative : **Dodd, David Michael et al**
**c/o Mewburn Ellis, 2 Cursitor Street**
**London EC4A 1BQ (GB)**

(54) **Digital signal processing device.**

(57) Device (1) for digital signal processing, particularly video and image processing, comprising a linear array of processing elements (PE's) (2), an external controller interface (4), input/output ports (6), and an external memory interface (8). The input/output ports (6) allow interfacing to equipment such as digitizing cameras and video display monitors. Single instruction multiple data topology (SIMD) is used and incorporates two modes of communication : horizontal and vertical. Shift registers (10,12) provide horizontal parallel communication between the PE's in the linear array. There is one PE (2) for each digital sample, e.g. a pixel, and a sequence of data samples, e.g. a video line, can be processed in real-time. Each PE (2) includes a bit-serial arithmetic logic unit (14), a cache memory (18) and an external memory interface register (20). All communication within a PE (2) is along a one-bit wide bus, i.e. vertical mode, using a single move instruction with variable source and destination addresses. The processing capability of the device (1) is further enhanced by having a serial-parallel multiplier (16) in each PE (2). For applications requiring more PE's, two or more devices can be cascaded together. In another embodiment dual-port memories provide horizontal communication between the PE's in the linear array.

EP 0 463 721 A2

FIG. 1

## FIELD OF THE INVENTION

This invention relates to a digital signal processing device. More particularly, it relates to a linear array of processors suitable for video and image processing.

## BACKGROUND OF INVENTION

In video and image processing applications, real time processing is essential. Using an array of processors achieves high processing speed, but shifts the bottleneck to inter-processor communications. Computer architectures, which reduce unnecessary chip-to-chip or processor-to-processor communication, are one method of solving the communication bottleneck and thereby increasing processing speed.

To reduce the communication bottleneck, various processing array architectures have been developed. For example there are the "pipeline image processing" systems developed at Berkeley University and described in an article by P.A. Ruetz and R.W. Broderson, An Image-Recognition System Using Algorithmically Dedicated Integrate Circuits, Machine Vision Applications, Volume 1, pp. 3-22, January 1988. In the system described by Ruetz and Broderson, a set of application specific chips are connected in a pipeline, i.e. each processor performs some processing on its input data stream and produces an output data stream for the next processor in the sequence. In this system, each chip contains an Algorithm Dedicated Processor array which provides the next stage with an array of processed data corresponding to the present stage. Typically, the size of the processor array is equal to the processing window size. The main drawback of the pipeline system approach is the lack of flexibility due to the special purpose processors. Implementations of the pipeline architecture include INMOS's convolution chip and the DCT chip.

To overcome the inflexibility of special purpose processors in a pipeline system, an alternative is to use an array of general purpose processors. System architectures based on an array of general bit-programmable processors have been proposed and implemented. One such system, based on Active Memory Technology's (AMT) Distributed Array of Processors (DAP) is described by D.J. Hunt in AMT DAP - A Processor Array in a Workstation Environment, Computer Systems Science and Engineering, April 1989, Vol. 4, No. 2, pp. 107-114. Another system is Applied Intelligent System's, AIS-5000 array processor.

Image processing systems built around general purpose processor arrays provide flexibility and high execution speed. The programmable processors give the system flexibility, whereas the high execution speed comes from distributing the computing power among a large number of small processors. However, some these systems are hampered by the need to access external memory devices. Typically, a processor chip contains only 8 to 64 bit-programmable processors and very little, if any, on-chip memory. The other problem encountered by processor arrays concerns the interconnect required to link the processors in the two-dimensional array. The interconnect occupies considerable chip area and also reduces the amount of on-chip memory. Consequently, such an image processing system requires numerous processor chips and external memory chips to achieve a viable processing architecture. The resulting complexity, size and cost of these systems prevent a cost-effective solution for many video and high-speed image processing applications.

Accordingly, it is an object of the present invention to provide cost-effective video and image signal processor using a single-chip device based on a linear array of programmable bit-serial processors.

Another object of the invention is to provide a true bit-serial Arithmetic Logic Unit (ALU) having an execution speed in the same order as the ALU's of conventional bit-serial processors.

The present invention provides a linear array of bit-serial processor elements each utilizing a memory-bus organized architecture. The use of a memory-bus architecture allows a single-chip to contain the same number of serial-bit ALU's and serial-parallel bit-multipliers as the number of picture elements (pixels) in one line of a video or other image, typically 512 or 1024 pixels per digital format image, and up to 1135 pixels for standard PAL format.

The processor elements in the array are connected in single instruction multiple data (SIMD) topology. The SIMD topology consists of a single program controller, and an array of processing elements (PE). The controller executes the control program and broadcasts commands to the processing elements. The processing elements, in turn, receive and execute the broadcast commands on their own local data, hence the term single instruction, multiple data. Each bit-serial PE includes parallel shift registers to provide fast input/output communication to remote off-chip devices and local communication to other bit-serial PE's.

## SUMMARY OF THE INVENTION

According to a first aspect of the present invention, there is provided a device for digital signal processing comprising: (a) a data input port; (b) a data output port; (c) a linear array of processor elements, each processor element having, (i) bus means for transferring data within the processor element, (ii) a plurality of logic units coupled to said bus means; (d) said logic units for each processor element including an arithmetic logic unit (ALU), and communication interface means; (e) said communication interface means of a least some of the processor elements including means for receiving data from adjacent processor elements and means for transferring data to adjacent processor elements; (f) address/data enable means coupled to said logic units of each processor element for addressing said logic units and for controlling the transfer of data on said bus means; and (g) means for coupling said data input port to said communication interface means of one processor element and means for coupling said data output port to said communication interface means of another processor element, so that, all data transfer between each processor element is on said communication interface means, and all data transfer within each processor element is on said bus means.

## BRIEF DESCRIPTION OF THE DRAWINGS

Specific implementation for the present invention will now be described, by way of example, with reference to the accompanying drawings in which:

Fig. 1 shows a schematic representation of one embodiment comprising a single-chip video image processor;

Fig. 2 is a schematic representation of the organization of a bit-serial processor element;

Fig. 3 is a schematic representation of a bit-serial Arithmetic Logic Unit (ALU);

Fig. 4, is a schematic representation of a memory cell in the cache memory;

Fig. 5 is a schematic representation of the serial-parallel multiplier logic unit;

Fig. 6 is a schematic representation of the interface between the processor element and external memory;

Fig. 7 shows a floor-plan of an embodiment of the invention;

Fig. 8 is a schematic representation of the communication enable unit for a processor element;

Fig. 8A is a block representation of a modification of the arrangement shown in Fig. 8;

Fig. 9 is a schematic representation of an input memory cell for the dual-port memory;

Fig. 10 is a schematic representation of an output memory cell for the dual-port memory;

Fig. 11 is a schematic representation of a differential bus structure for the processor elements;

Fig. 12 shows the video image processor in the basic stand-alone or single-chip configuration; and

Fig. 13 shows the video image processor configured with external memory and a controller.

## DETAILED DESCRIPTION OF THE PREFERRED EMBODIMENT

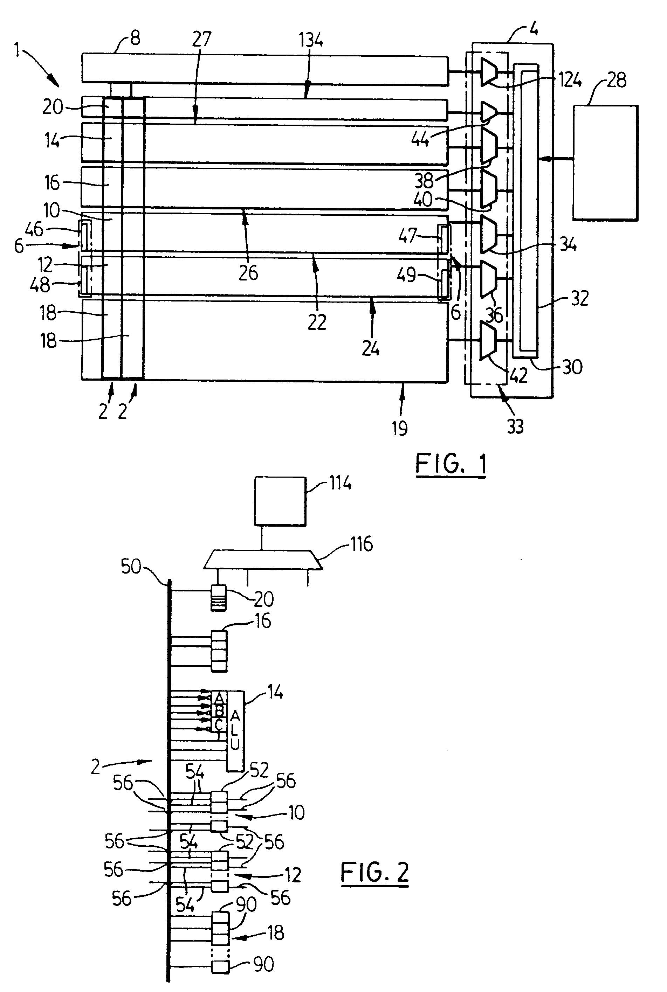

Referring to Fig. 1, a digital signal processing device 1 embodying the present invention includes a number of processing elements (PE) 2 arranged in a linear array, two such PE's 2 are specifically shown. The device 1 also includes an instruction/address controller 4, an input/output interface 6, and an external memory interface 8.

Each PE 2 can contain a number of logic units. As shown in Fig. 1, each PE 2 contains a first bi-directional shift register slice 10, a second bi-directional shift register slice 12, an arithmetic logic unit (ALU) 14, a serial-parallel multiplier 16, a cache memory slice 18, and an external memory interface register 20.

As depicted in Fig. 1, each PE 2 represents a slice in the linear array. Similarly within the PE 2, certain logic units are slices of functional blocks which form parts of the linear array. The first bi-directional shift registers 10 in each PE are slices which connect in parallel to form a first bi-directional shift register block 22, having a length equal to the linear array. Similarly, the second bi-directional shift registers 12 in each PE 2 are slices which connect in parallel to form a second bi-directional shift register block 24. The serial-parallel multipliers 16 in each PE 2 are also slices which connect in parallel to form a serial-parallel multiplier block 26. Similarly, the ALU's 14 in each PE 2 form an ALU logic block 27, and the cache memory slices 18 comprise the memory block 19. Parallel communication between adjacent PE's 2 allows large amounts of data to be moved in relatively short periods, thereby enhancing the real-time processing capability of the device 1. In addition to this parallel communication path between adjacent PE's 2, the device 1 also provides another form of communication within a PE 2 as will be discussed below.

The instruction/address controller 4 receives instructions from an external micro-controller or a sequencer 28, decodes these instructions, and then applies them to a decoder block 33 which controls the various logic units in each PE 2. The controller 4 includes a controller interface 30 to connect with the external micro-controller or the sequencer 28.

In another aspect of the present invention, the interface 30 includes a 2.5 K by 32 bit instruction RAM (Random Access Memory) 32. The instruction RAM 32 provides a instruction buffer between the device 1 and micro-controller 28 which allows the micro-controller 28 to dump instructions into the RAM 32 for execution by the

EP 0 463 721 A2

on-chip controller 4. Alternatively, the instruction RAM 32 can provide an execution buffer for instructions which are downloaded from a bootstrap ROM (not shown) during the power-up sequence. Furthermore, the instruction RAM 32 can be replaced by on-chip program memory, such as a programmable read only memory (PROM) or an electrically erasable programmable read only memory (EEPROM) (not shown). Using a PROM or EEPROM offers the advantage of a single chip implementation for suitable applications, i.e. applications in which the control instructions do not exceed the capacity of the on-chip program memory. In addition, since an EEPROM can be reprogrammed, the device 1 can be used for new applications.

As shown in Fig. 1, the controller 4 also includes a decoder 34 to control the first bi-directional serial shift registers 10, a decoder 36 to control the second bi-directional serial shift registers 12, a decoder 38 to control the ALU's 14, a decoder 40 to control the serial-parallel multipliers 16, a decoder 42 to control the cache memory slices 18, and a decoder 44 to control the external memory registers 20.

Each particular logic unit is under the common control of the corresponding decoder. For example, if the controller 4 inputs an instruction to multiply the pixel value by a scalar quantity, then the decoder 40 will enable every serial-parallel multiplier 16 to execute the scalar multiplication. The common control of each logic block by the corresponding decoder provides a means for implementing the SIMD architecture which is especially suited for image processing applications.

Referring still to Fig. 1, to interface with external digital signal sources, i.e. a digitizing camera, the device 1 includes a pair of first and second input/output ports 46,47 and a pair of third and fourth input/output ports 48,49. The first input/output port 46 connects to one end of the first shift register block 22, and the second port 47 connects to the other end of the register block 22. Since both the register block 22 and ports 46,47 are bidirectional, either one of the ports 46,47 can be the input or output. As shown in Fig. 1, port 46 is the input and port 47 is the output. Similarly for the second shift register block 24, the third input/output port 48 connects to one end of the block 24, and the fourth port 49 connects to the other end of the block 24.

The widths of the first pair of ports 46,47 and the second pair of ports 48,49 are the same as that of the corresponding shift register blocks 22,24 and depend on the digital signal processing application. For example, an eight-bit pixel is common for television image applications, whereas a 12-bit data value is common in radar applications.

Referring to Fig. 2, each PE 2 is a 1-bit-wide computing unit and has an internal 1-bit-wide or serial bus 50. The serial bus 50 connects the first and second shift register slices 10,12, the ALU 14, the serial-parallel multiplier slice 16, the cache memory 18 and the external memory register 20, thereby allowing the various logic units within the PE 2 to communicate with each other. Since the bus 50 is serial or 1 bit-wide, the logic units in the PE 2 can only transfer one bit of data during the clock cycle, i.e. only one bit in each unit is read/written from/to the bus 50 at a time. The decoder block 33, described above, controls the source and destination logic units for the data bit.

The serial bus structure together with the decoders results in a memory-bus architecture in the PE 2. Each logic unit in the PE 2 has its own address much like a storage cell in a memory chip. To select a particular logic unit, i.e. ALU 14, from the PE 2, the controller 4 generates the appropriate control signals for the decoder, i.e. decoder 38, associated with the unit. The decoder then enables the selected logic unit allowing it to read or write a data bit from or to the serial bus 50. Using the memory-bus organization, the device 1 provides an efficient architecture whereby one or more pixels can be dedicated to a PE 2 and using a linear array of PE's 2 a complete line of a video image can be shifted into the device 1 and processed.

Referring still to Fig. 2, the first and second shift registers 10,12 each include a number of one-bit cells 52. In the present embodiment, the first and second shift registers 10,12 both have ten one-bit cells 52. Each cell 52 connects to the serial bus 50 via line 54, thereby allowing one bit data transfers between a cell 52 in either register 10,12 and the bus 50. As shown in Fig. 2, each cell 52 also includes a neighbour shift register connect line 56. The neighbour lines 56 connect each cell 52 with the corresponding cell 52 in the adjacent registers 10,12 on both sides of the cell 52. In this way, the device 1 provides parallel communication of data, i.e. pixels, between the PE's 2 in the linear array. Furthermore, since all the PE's 2 share the same structure and connect at their respective shift registers 10,12, they comprise the global shift register blocks 22,24.

As will be apparent now from Fig. 1 and Fig. 2, the device incorporates two modes of data transfer: horizontal data transfer and vertical data transfer. In horizontal data transfer mode, the device 1 uses the shift register blocks 22,24 to move data from the input ports 46,47 "horizontally" from one PE 2 to the next PE 2 through to the output ports 48,49. Since the shift register blocks 22,24 can be as wide as the data sample, i.e. an eight-bit pixel, the device can move a sequence of digital data samples in parallel between the PE's 2. In vertical transfer mode, the device 1 uses the serial bus 50 to move data from the individual shift registers 10,12 contained in the corresponding register blocks 22,24 into the various logic units in the PE 2 for processing. For example, the device 1 can transfer the data from the first shift register 10 into the cache memory 18 and then add it to a scaler quantity also stored in memory 18. By having the PE's 2 organized as a linear array, a whole sequence

5

of data samples, for example a complete line of VGA* video graphics - 720 pixels, can be shifted into the device 1 and processed by the array of PE's 2 using the vertical transfer mode.

To process a pixel, the device 1 uses the vertical data transfer mode to move data between the logic units in the PE 2. As was discussed above, each PE 2 has a serial bus 50 which connects its logic units. Pixel data to be processed is moved bit-by-bit along the serial bus 50 to the logic units, processed, and then either stored locally in the cache memory 18, or moved back to the shift registers 10,12, where it can be transferred to another PE 2 or to an external device, i.e. a video display terminal (not shown), via the output ports 47,49.

These two modes of data transfer combine with the local processing capability of each PE 2 to provide a powerful architecture for moving and processing pixel or other digital data. Using a sampling clock or other sequencer, the device 1 can shift in a whole series of digital data samples horizontally via the shift registers 10,12, separately process each data sample using the linear array of PE's 2, and then sequentially shift out the processed data samples horizontally via the shift registers 10,12. Furthermore, since the device 1 is organized as a linear array, a new sequence of data samples can be shifted in at the same the previously processed sequence of data samples is being shifted out.

For example in a raster-scan video application, the device 1 can input horizontally a complete line of eight bit wide pixels using the first shift register block 22, while simultaneously outputting horizontally the processed pixels from a previous raster-scan line using the second shift register block 24. During the line return period of the raster-scan, the device 1 loads the second shift register block 24 with the processed pixels from the previous raster-scan line (vertical transfer), and transfers the inputted line of pixels into the cache memory block 19 (again vertical transfer) for processing. The real-time processing capability of the device 1 is further enhanced by the large number of bit-serial ALU's 14 and serial-parallel multipliers 16 and cache memory 18 in each PE 2 as will be discussed below.

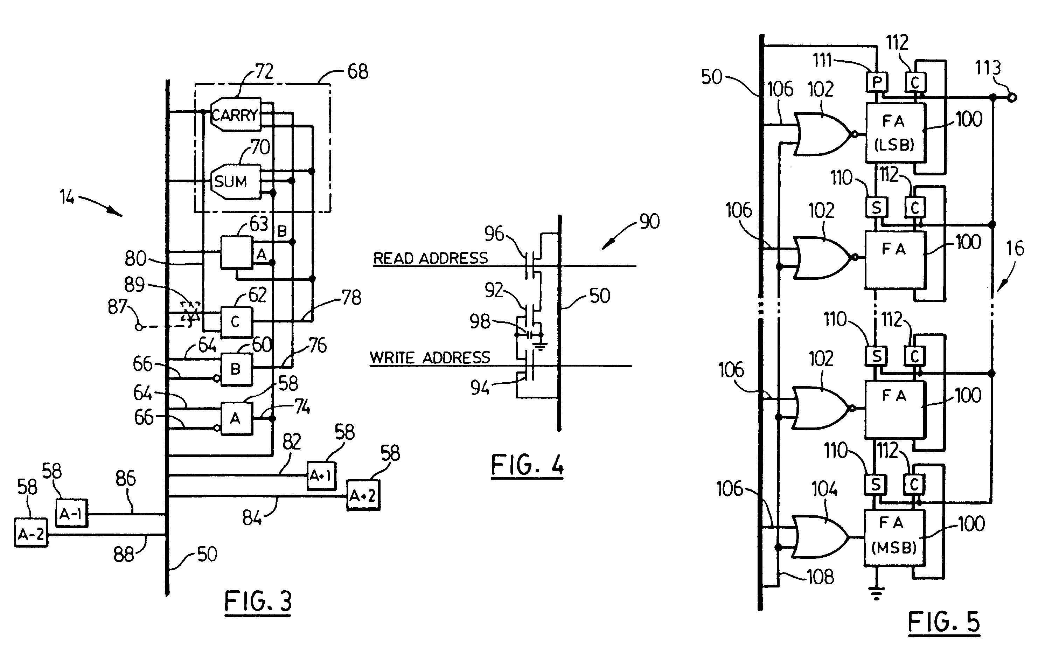

Referring to Fig. 3, the ALU 14 includes three one-bit registers: the A register 58, the B register 60, and the C register 62. The registers 58,60,62 store one-bit data read from the bus 50 and are addressed by the decoder 38 (not shown). The A and B registers 58,60 each have two input lines 64,66 connected to the bus 50. One of the lines 64 is a direct input from the bus 50, while the other line 66 is the logical complement of the data read from the bus 50. The combination of inverted and non-inverted data input lines 64,66 extends the Boolean function capability of the ALU 14.

Referring still to Fig. 3, the ALU 14 includes a full adder 68, which consists of a SUM logic unit 70 and a CARRY logic unit 72. The three registers 60,62,64 each have outputs 74,76,78 which feed into the sum logic 70 and the carry logic 72, thereby providing a binary full adder function. The C register 62 also includes a carry feedback input 80 which is connected to the output of the carry logic unit 72. This feedback input 80 to the C register 62 improves the speed of binary additions and subtractions.

As shown in Fig. 3, the ALU 14 includes a Boolean logic unit 63. The logic unit implements the logical expression: AC + BC* (where C* denotes logical complement of C). In this expression, A,B,C are the contents of the A,B,C registers 58,60,62, and are tapped using the output lines 74,76,78, respectively. The logic unit 63 facilitates executing certain Boolean functions in the ALU 14.

The ALU 14 also includes a tap line 82 connecting the bus 50 to the A register 58 of the first right neighbour PE 2 (first right neighbour tap line), and a tap line 84 connecting the bus 50 to the A register 58 of the second neighbour to the right of the PE 2 (second right neighbour tap line). These tap lines 82,84 facilitate performing certain digital signal processing algorithms such as 2-D image edge extraction in which smoothing is performed by adding two horizontal neighbours followed by adding two vertical sums. As shown in Fig. 3, the ALU 14 includes two similar tap lines 86,88 for the first and second left neighbours of the PE 2 (first and second left neighbour tap lines).

Consistent with the memory-bus architecture of the device 1, the registers 58,60,62, the SUM unit 70, CARRY unit 72 and neighbourhood tap lines 82,84,86,88 all connect to the bus 50 as memory cells. Each unit in the ALU 14 includes an address line 87 (shown in dotted lines). In one aspect of the invention, the address line connects to a transmission gate 89 (shown in dotted lines) which couples the unit to the bus 50. The controller 4 through the ALU decoder 38 uses the line 87 to address the transmission gate 89 thereby enabling the unit to read or write data from or to the bus 50.

As is apparent in Fig. 3, the ALU 14 characterized by this invention is a true bit-serial arithmetic logic unit. Organized around the serial bus structure, the ALU 14 can only read or write one bit of data per clock cycle. This is not the case for most other ALU's which use multiplexers to simultaneously feed input registers with different data. By utilizing the serial bus structure, the device 1 avoids the need for multiplexers, thereby achieving significant savings in area on the semiconductor chip.

The addresses used to control the ALU 14 in the present embodiment are listed in Table I.

*VGA Video Graphics Adaptor - Trade-mark IBM

## TABLE I

| ALU ADDRESS/COMMAND | OPERATION |
| --- | --- |
| 0 | CARRY (72) to bus (50) |
| 1 | CARRY (72) to bus (50) and CARRY feedback (80) |
| 2 | Bus (50) to C Register (62) |
| 3 | Logic AC + BC* (63) to bus (50) |
| 4 | Bus (50) to B Register (60) |
| 5 | Bus (50) to B Register (60) and CARRY feedback (80) |
| 6 | Bus* (66) to B Register (60) |
| 7 | SUM (70) to bus (50) |
| 8 | Bus (50) to A Register (58) |
| 9 | Bus* (66) to A Register (58) |
| 10 | A Register (58) from second left neighbour (88) PE to Bus (50) |
| 11 | A Register (58) from first left neighbour (86) PE to bus (50) |
| 12 | A Register (58) to bus (50) |
| 13 | A Register (58) from first right neighbour (82) PE to bus (50) |
| 14 | A Register (58) from second right neighbour (84) PE to bus (50) |
| 15 | No operation |

* denotes logical complement

As can be seen from the instructions listed in TABLE I, the ALU 14 operates on the basis of the MOVE or data transfer instruction. By moving the data to the appropriate destination, i.e. logic unit, the ALU 14 processes

7

the data. For example, to add three bits together involves executing the following MOVE instructions:

8 - Bus to A; Move first data bit to A register

4 - Bus to B; Move second data bit to B register

2 - Bus to C; Move third data bit to C register

7 - SUM to Bus; Read result by moving sum to Bus

The sum of the three bits can then be moved to the first shift register 10 or cache memory 18 by issuing the appropriate MOVE instruction.

As illustrated in Fig. 2, the cache memory slice 18 connects to the serial bus 50. Each cache memory slice 18 includes a number of single-bit data cells 90. These cells 90 all individually connect to the serial bus 50, thereby allowing the transfer of data between the bus 50 and the individual memory cell 90. By using the decoder 42 to address a particular memory cell 90, its data is written to the bus 50 and can then be read or inputted by another logic unit connected to the bus 50, for example, the A register 58 of the ALU 14. In the present embodiment, the cache memory slice 18 for a PE 2 is 256 bits. Accordingly, for an eight-bit pixel, 32 pixel values can be stored in the cache memory 18 alone.

In Fig. 4, the organization of the data memory cell 90 is shown. In the present embodiment, each cell 90 comprises three field effect transistors: a storage transistor 92, a write transistor 94, and a read transistor 96. The write transistor 94 connects between the gate of the storage transistor 92 and the bus 50. The read transistor 96 connects between the source of the storage transistor 92 and the bus 50.

To write, or store, a bit of data to the storage transistor 92, the controller 4 executes a MOVE instruction. The MOVE instruction involves addressing the source of the data bit, for example the SUM logic unit 70 in the ALU 14, to output the data bit to the bus 50. At the same time, the controller 4 executes the MOVE instruction on the memory cell 90, i.e. the destination address, which through the decoder 42 turns on the write transistor 94, thereby transferring the data bit from SUM logic unit 70 via the bus 50 to the storage transistor 92. The data bit is stored as a charge on a parasitic capacitor 98 formed between the gate and source of the storage transistor 92.

To read the memory cell 90, a MOVE instruction is again executed, but for a read operation, the memory cell 90 becomes the source address. For example, to transfer the data bit stored in the memory cell 90 to the B register 60 of the ALU 14, the controller 4 executes a MOVE instruction, with the read transistor 96 comprising the source address and the B register 60 comprising the destination address. When addressed through the decoder 42, the read transistor 96 turns on and connects the storage transistor 92 and capacitor 98 to the bus 50, thereby writing the data bit to the bus 50. The B register 60, as the destination address, at the same time inputs the data bit from the bus 50.

As is apparent from Fig. 4, the memory cells 90 of the cache memory 18 are dynamic random access memory (DRAM). Compared to static random access memory (SRAM), DRAM has the advantage of using much less chip area and low power consumption. However, the DRAM memory cell 90 requires periodic refresh signals to regenerate the saved data since the storage capacitor 98 loses voltage, because of leakage currents. In its present embodiment, the invention does not include additional refresh circuitry because of the high internal speed at which data moves in the device 1, i.e. 20 MHz clock rate. In applications where data degeneration is a factor, a refresh can be implemented in the program for the controller 4, i.e. software refresh.

The serial-parallel multiplier 16 used in the present embodiment of the device 1 is shown in Fig. 5. The multiplier 16 is a bit-serial pipeline logic unit in which the multiplicand is multiplied by the multiplier bit-by-bit and the resultant product is shifted out to the bus 50 bit-by-bit.

As shown in Fig. 5, the multiplier 16 consists of a number of full adders 100 connected in series or pipeline. The full adders 100 are cascaded in sequence, corresponding to most significant bit (MSB) of multiplicand to least significant bit (LSB) of multiplicand. Each full adder 100 includes a logic gate which interfaces the full adder 100 to the bus 50. As depicted in Fig. 5, the bus 50 interfaces to the full adders 100 through a NOR gate 102, except for the MSB full adder 100 which uses an OR gate 104. Each logic gate 102,104 has a first input 106 and a second input 108. The first input 106 loads the multiplicand bit, with its address corresponding to the MSB to LSB sequence. The second input 108 is the bit of multiplier operating on the multiplicand. In the implementation of the multiplier 16, the second input 108 is common to all the logic gates 106, 108.

Referring still to Fig. 5, each full adder 100 also includes first and second one-bit registers 110,112. The first one-bit register 110 provides storage for the SUM result from the corresponding full adder 100. The second one-bit register 112 provides storage for the CARRY result from the corresponding full adder 100. These registers 110,112 store the results from the previous addition in the sequence. The SUM register 110 feeds into the full adder 100 of the next stage, and the CARRY register 112 feeds back into the full adder 100 at the same stage. A one-bit product register 111 replaces the SUM register 110 of the full adder 100 for the LSB. The product register 111 connects to the bus 50, and using this register 111 the multiplier serially shifts out the product.

As shown in Fig. 5, each register 110,111,112 also connects to a reset line 113. Under the control of the instruction/address controller 4, the reset line 113 provides an initialization signal to put the three registers 110,111,112 into a known state, i.e. logic zero, prior to a multiplication operation.

In the present embodiment, there are 10 full adders 100 cascaded together, thereby allowing a 10-bit multiplicand to be multiplied in a serial-pipeline fashion. Table II lists the instructions used to control the multiplier 16.

## TABLE II

| MULTIPLIER ADDRESS | OPERATION |
|---|---|
| 0 to 9 | Bus (50) to input (106) for LSB to MSB, i.e. address to load 10-bit multiplicand bit by bit |
| 10 | Bus (50) to second logic gate input (108) and shift result to registers (110,111,112) |
| 11 | Bus (50) to second logic gate input (108) |
| 12 | Product register (111) to bus (50) |
| 13 | Product register (111) to bus (50) and shift registers (110,111,112) |
| 14 | Reset (113) multiplier (16) |
| 15 | No operation |

Consistent with the memory-bus architecture of the device 1, the instructions in Table II comprise MOVE instructions with source and destination addresses, which provide data transfer to/from the bus 50 to the multiplier 16. For example, there are instructions: for loading the multiplicand LSB to MSB, i.e. addresses 0 to 9 on input lines 106 for the multiplier 16; for serially loading the multiplier, i.e. addresses 10 and 11 for the multiplier 16; and for serially shifting the resultant product to the bus 50, i.e. address 13 for the serial multiplier 16. Using these instructions, the multiplier 16 can serially multiply a 10-bit multiplicand and write the resulting product into the cache memory 18 or the shift registers 10,12.

Table III lists the remaining instructions for the device 1. As can be seen, these address/commands include instructions for controlling the remaining logic units in the PE's 2, such as the first and second shift registers 10,12, the cache memory 18, and the external memory interface 20.

## TABLE III

### (1)    FIRST SHIFT REGISTER (10)

| ADDRESS/COMMAND | OPERATION |
| --- | --- |
| 0 to 7 | Bus (50) to bit0 to bit7, i.e. cells (52), of first shift register (10). |
| 8 to 15 | Bit0 to bit7, cells (52), of first shift register (10) to bus (50). |
| 16 | SHIFT first register (10) to right (horizontally). |
| 17 | SHIFT first register (10) to left (horizontally). |
| 18 | Standby |

### (2)    SECOND SHIFT REGISTER (12)

| ADDRESS/COMMAND | OPERATION |
| --- | --- |
| 0 to 7 | Bus (50) to bit0 to bit7, i.e. cells (52), of second shift register (12). |
| 8 to 15 | Bit0 to bit7, cells (52), of second shift register (12) to bus (50). |
| 16 | SHIFT second register (12) to right (horizontally). |
| 17 | SHIFT second register (12) to left (horizontally). |
| 18 | Standby |

### (3)    CACHE MEMORY (18)

| ADDRESS/COMMAND | OPERATION |
| --- | --- |
| 0 to 256 | Bit0 to bit256, i.e. cells (90), of cache memory (18) to bus (50). |
| 257 to 511 | Bus (50) to bit0 to bit256, cell (90), of cache memory (18). |

**(4)  EXTERNAL MEMORY INTERFACE (8)**

| ADDRESS/COMMAND | OPERATION |
|---|---|
| 0 to 7 | External memory (114) to one of the interface registers (20), i.e. 0 to 7. |
| 9 to 15 | One of the interface registers (20), i.e. 0 to 7, to external memory (114). |
| 16 | Interface register (20) to bus (50). |
| 17 | Bus (50) to interface register (20). |
| 18 to 26 | One of eight bits from external read only memory (114) to bus (50). |

As is apparent from Tables I, II and III, the commands for controlling the device 1 all reduce to a single MOVE instruction. By using a source address and a destination address, the MOVE instruction transfers one bit of data from the source along the bus 50 to the destination address. By having the logic units in a PE 2 organized as memory addresses on the serial bus 50, the data can be broadcast from one source address to many destination addresses. Since the device 1 is a single instruction computer (SIC), i.e. the extreme case of a Reduced Instruction Set Computer (RISC), computation occurs by having logic circuits located at the addresses on the serial bus 50 and writing or reading to the particular address.

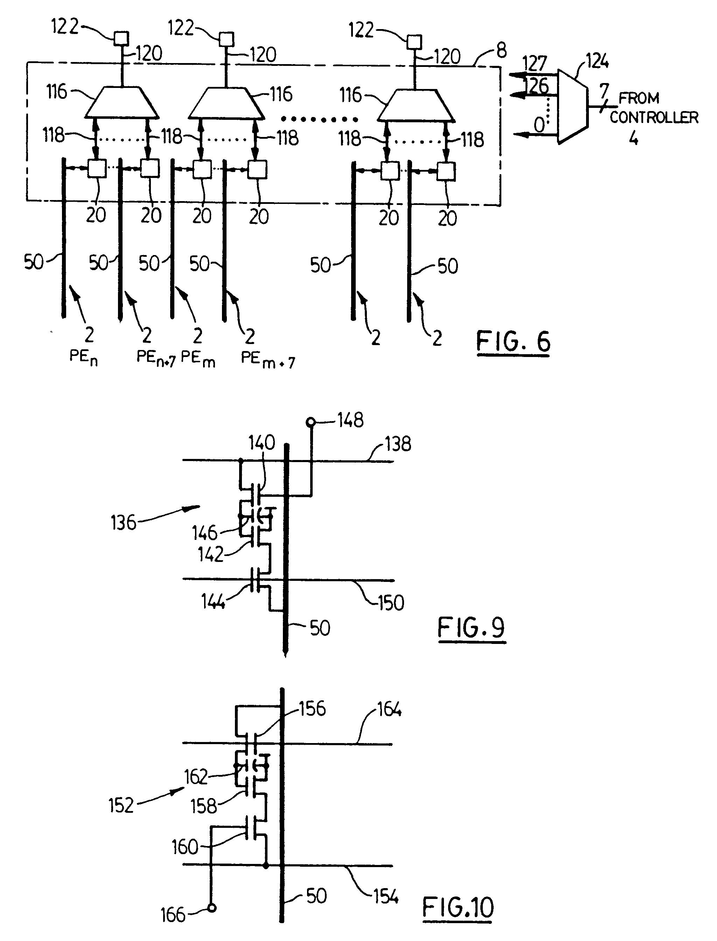

In some image and video processing applications, it may be necessary to store more data than can be saved in the on-chip cache memory 18. For such applications, the device 1 includes the external memory interface 8 depicted in Fig. 6. The external memory interface 8 allows the device 1 to have an expanded storage capacity, by connecting the array of PE's 2 to an external memory device 114, such as a RAM chip or other mass storage device. The external memory device 114 could also be a read only memory (ROM) chip for an application requiring a look-up table for example.

As shown in Fig. 6, the external memory interface 8 includes the interface register 20 for each PE 2 and a series of multiplexers 116. In each PE 2, the register 20 connects the bus 50 to an input 118 of the multiplexer 116, and an output 120 of the multiplexer 116 connects to an output pad 122. The output pad 122 provides a contact point for connecting the pins or leads (not shown) on the carrier or package to the semiconductor die.

Referring still to Fig. 6, the register 20 provides a buffer function which is necessary since the internal speed of the bus 50 can be many times the access time of the external memory device 114. In the first aspect of the present invention, the registers 20 buffer one bit of data. In another aspect of the present invention, the register 20 includes 8 one bit cells to provide buffering for one byte of data, thereby allowing the device 1 to interface with slow external memory devices 114.

Although multiplexers can occupy considerable chip area, in the external memory interface 8 they save chip area because of output pad 122 and pin-out limitations. To provide a direct one-to-one interface for each PE 2 would result in a high output pad and pin count which could make fabricating and packaging the device 1 very difficult, if not an impossibility. Consequently, by utilizing the multiplexers 116 to route the PE's 2 to the external memory device 114, there is a substantial savings in chip area and package size, without any significant loss in external access since register 20 provides a buffer for slower memory devices 114.

In the illustrated embodiment of the present invention, the interface 8 utilizes a number of 8-to-1 multiplexers 116 to connect the PE's 2 to the external memory 114. For a linear array of 1024 PE's 2, the interface 8 requires 128 of the multiplexers 116. A decoder 124 selects the multiplexer 116 for external memory output. The decoder 124 generates a multiplexer select signal based on seven address inputs from the controller 4.

11

In the SIMD architecture of the device 1, each of the 128 multiplexers 116 selects one of the interface registers 20 connecting to its eight input lines 118, based on the external memory instructions listed in TABLE III. For example, to output the data bit from the second PE in the group of eight, the controller 4 requires the address/command 10 which enables interface register 1. In other words, the device 1 utilizes a two-tier addressing scheme to output data to the external memory 114, i.e. addressing the multiplexer 116, then selecting the input 118 from one of the eight interface registers 20.

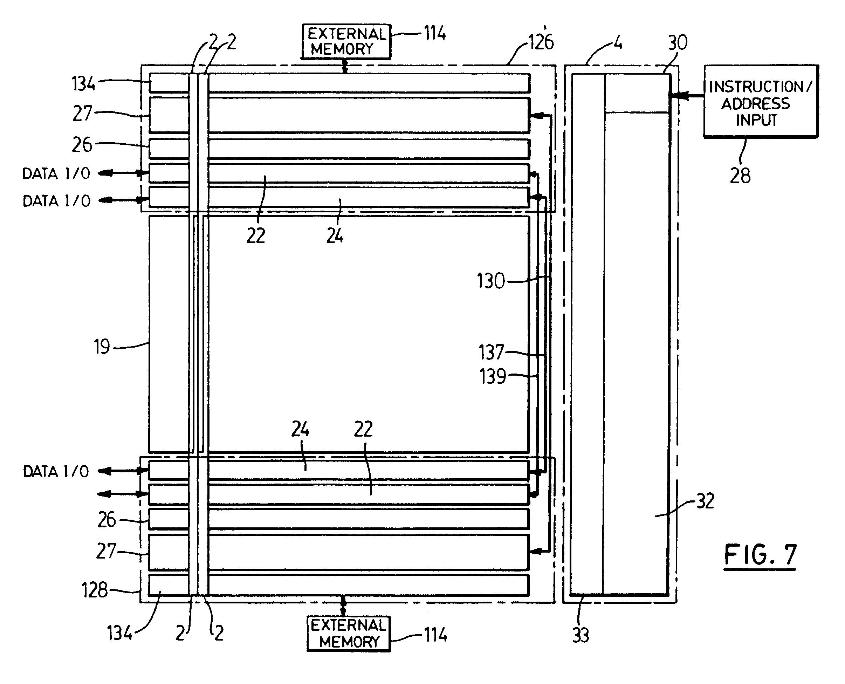

Reference is next made to Fig. 7, which shows the floor plan, i.e. layout, of the device 1 on a semiconductor die or "chip". Based on a die size of one square centimetre and using a sub-micron pitch, i.e. line-width, a linear array of 1024 processing elements 2 can be implemented as an upper group 126 and a lower group 128. In the layout, there are 512 PE's 2 arranged in the upper group 126 and 512 PE's 2 arranged in the lower group 128. As shown in fig. 7, the single cache memory block 19 is split between the upper group 126 and the lower group 128. The PE's 2 in the upper group use odd columns of the cache memory block 19 and the PE's 2 in the lower group use even columns of the cache memory block 19. This layout is possible since the pitch of the cache memory block 19 can be finer than the pitch of an individual PE 2. In addition, this layout organization is an efficient utilization of the chip area.

As discussed above, each PE 2 comprises a number of logic units: the first and second bi-directional shift registers 10,12, the ALU 14, the serial-parallel multiplier 16 and the external memory interface register 20. As shown in Fig. 7, each of these logic units is laid out as a linear array of 512 elements corresponding to the upper group 126 and the lower group 128 of the processing element array. In addition to the first and second shift register blocks 22,24, the ALU logic block 27, and the serial-multiplier block 26, there is an external memory interface block 134. Also located on the same chip is the controller interface 30, which can include the instruction RAM 32 or PROM (not shown). Using this block structure, less interconnect is required between the various logic units in the PE 2, which results in efficient use of the chip area.

Referring still to Fig. 7, since the linear array of PE's 2 is divided into lower and upper groups 126,128, a first and second bus 137,139 join the respective first and second shift register blocks 22,24 to form the 1024 bit long register blocks 22,24. As discussed above, the register blocks 22,24 provide the horizontal communication path between all the PE's 2 in the linear array. A similar bus 130 joins the corresponding lower and upper groups of the ALU logic block 27.

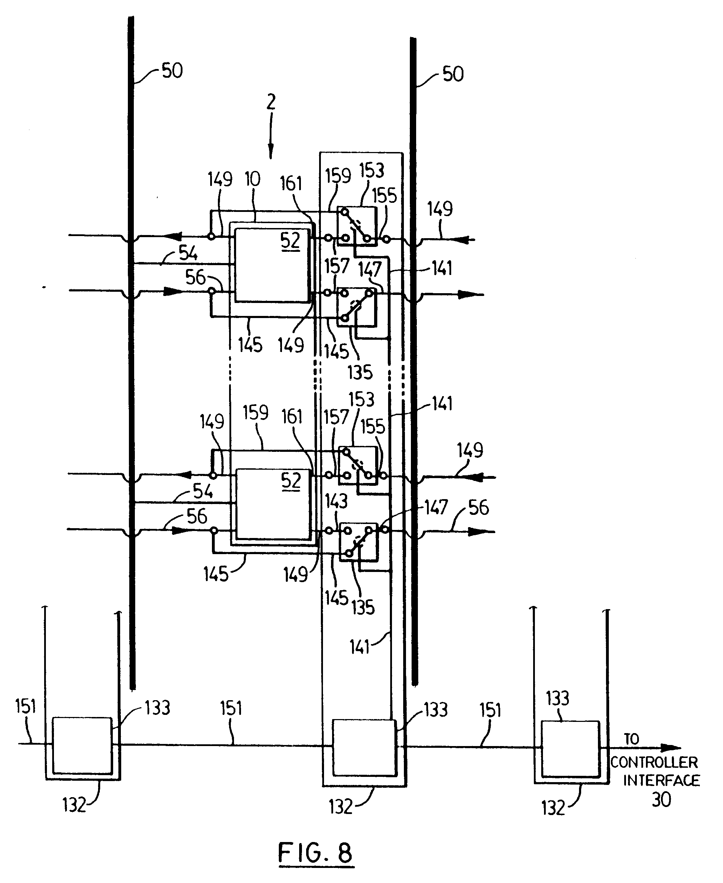

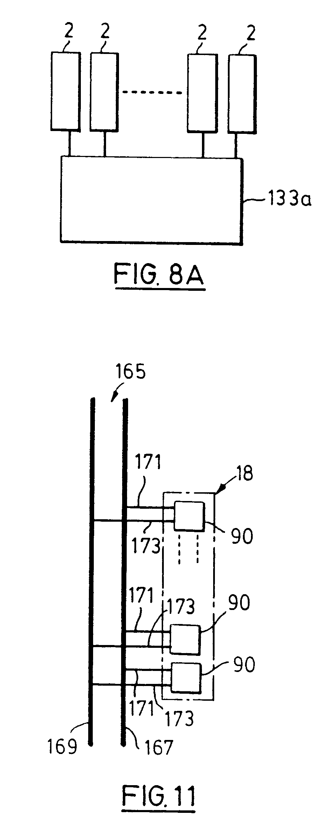

Reference is next made to Fig. 8 concerning another aspect of the present invention in which the PE 2 includes a communication enable unit 132. The communication enable unit 132 enables or disables a particular PE 2 from communicating with adjacent PE's 2 , i.e. to the right and to the left, by controlling the data path between the cells 52 in adjacent shift register slices 10,12. Using the enable unit 132, a particular PE 2 can be isolated from the horizontal communication path. Isolating a particular PE 2 provides the present invention with additional functionality, as will be discussed below.

Each PE 2 includes its own communication enable unit 132 which is coupled to the shift registers 10,12. In the following discussion, the operation of the communication enable unit 132 will be discussed with respect to the first shift register 10, as illustrated in Fig. 8. The operation of the enable unit 132 is identical for the second shift register 12, as will be evident to one skilled in the art. As shown in Fig. 8, the communication enable unit 132 couples to the shift register 10. The unit 132 includes a state register 133, a number of first control switches 135, and a number of second control switches 153. There are first and second control switches 135,153 for each one of the cells 52 in the shift register 10. A control line 141 connects all of the first and second control switches 135,153 to the state register 133, and using the line 141 the state register 133 controls the switches 135,153.

Referring still to Fig. 8, each first control switch 135 includes a data feed input 143, a data by-pass input 145 and an output 147. The data feed input 143 connects to a neighbour cell output line 149 from the cell 52 in the shift register 10, whereas the data by-pass input 145 connects to the neighbour cell input line 56. The output 147 of the switch 135 connects to the neighbour cell input line 56 of the adjacent PE 2 to the right, as depicted in Fig. 8. Under the control of the state register 133, the switch 135 selects one of the two inputs 143,145 for routing to the output 147 and adjacent PE 2 to the right.

As shown in Fig. 8, the second control switch 153 is a mirror image of the first control switch 135. Each second control switch 153 includes a single input line 155, a data feed output 157, and a data by-pass output 159. The input line 155 connects to the neighbour cell output line 149 of the adjacent PE 2 to the right as shown in Fig. 8. The data feed output 157 connects to a neighbour cell input line 161 on the cell 52 of the shift register 10, whereas the data by-pass output 159 connects the neighbour cell output line 149 of the cell 52 of the shift register 10. Similar to the first control switch 135, the second control switch 153, under the control of the state register 133, i.e. using the control line 141, routes the input 155 connected to the neighbour line 149 of the adjacent PE 2 to one of the outputs 157,159.

For example, to isolate a particular PE 2, under the control of the state register 133, the first switch 135 selects the neighbour cell input line 56 of the adjacent PE 2 to the left, i.e. data by-pass input 145, and the second switch 153 routes the neighbour cell output line 149, of the adjacent PE 2 to the right, to the data by-pass output 159. As shown in Fig. 8, this effectively "shorts out" the cell 52 of the shift register 10 in the particular PE 2 in both data directions, i.e. data right and data left, thereby isolating the PE 2 from the horizontal communication path. As is evident to one skilled in the art, the bi-directional data transfer capability of the shift registers 10,12 requires that first and second switches 135,153 be used to isolate the cells 52 in both directions. If uni-directional devices (to be discussed below) replace the shift registers 10,12, then the only a single control switch 135 or 153 would be required to isolate the PE 2 from the adjacent right and left PE's 2.

As discussed above, the state register 133 controls the routing path of the first and second control switches 135,153. In the present embodiment of the invention, the state register 133 comprises a single-bit register, with the data bit controlling the state of the first and second control switches 135,153. As shown in Fig. 8, a line 151 connects the state register 133 of each PE 2 to the state register 133 in the adjacent PE's 2. The connection of the state registers 133 allows a serial control word, i.e. the string of data bits for each state register 133, to be serially shifted into the device 1. Since the first and second control switches 135,153 for each PE 2 are controlled by the data stored in the state register 133 for that PE 2, the enable units 132 are particularly suited to programmed control. For example, an external micro-controller 28 using the controller interface 30 can be used to serially shift in the control word, or in another application the control word can be stored in the bootstrap ROM (not shown) and downloaded as part of the power-up sequence as discussed below.

In another aspect of the present invention, the state register 133 structure can be implemented using a programmable storage device 133a such as a PROM or an EEPROM as depicted in Fig. 8A. Each state register 133 is replaced by a memory location in the programmable storage device 133a. The memory location is associated with a particular PE 2 in the linear array and the enable state of the particular PE 2 is programmed, or stored, by writing the enable state to the address of the corresponding memory location. This alternative implementation of the state register 133 offers the additional advantage that the storage device can be programmed to disable any faulty PE's at the test and packaging stage of the device 1, while still offering the end-user the capability to program the functioning PE's according to the requirements of the digital signal processing application for the device 1.

Using the serial control word under programmable control allows the state of the PE's, i.e. enabled or disabled, to be changed "on the fly". This ability to quickly select particular PE's in the linear array provides additional functionality and flexibility. By way of example, three programmable function which the communication enable units 132 can provide are: (1) PE testing; (2) faulty PE isolation; and (3) programmable linear array length.

The communication enable units 132 allow each PE 2 in the linear array to be individually tested and exercised. This is particularly important when the device 1 is first cut from the semiconductor substrate and mounted in a test fixture. To test a particular PE in the linear array, the control word enables that PE while disabling all the other PE's. For example, to test the fourth PE in the linear array, the control word would contain all zeros except for a logic 1 in the fourth bit position.

Related to the testability function is the faulty PE isolation function. Once a faulty PE is detected during the testing algorithm, the faulty PE can be isolated by setting the bit and state register corresponding to that particular PE. For example, if in a device having a linear array of 1,024 PE's there are found to be ten faulty PE's, the location of these faulty PE's can be documented for the customer. As part of firmware for the external micro-controller 28, for example, the customer disables the faulty PE's. The testing and isolating functions also increase the number of usable devices which can be shipped to customers. For example, in applications requiring smaller linear arrays, devices 1 which include a number of faulty PE's, but a sufficient number of functioning PE's, can still be used.

The third function is the programmability of the linear array length. As is now apparent, the serial control word shifted into the state registers 133 can be used not only to isolate particular PE's 2, but also to control the length of the linear array. To control the length of the linear array, the control word simply enables the required number of PE's 2. For example, if a device has a linear array of 1,024 PE's and only 720 PE's are required, e.g. VGA graphics, PE's 720 to 1,024 can be disabled by writing zeros to the bits in the control word corresponding to these PE's. Furthermore, disabling the unused PE's 2 increases the effective bandwidth of the device 1 in the horizontal communication path. In the present embodiment of the invention, the communication enable unit 132 was described as including one state register 133; however, by including additional state registers (not shown) multiple configurations of the linear array can be stored locally in the device 1, thereby facilitating "on the fly" changes to the linear array configuration for the particular application.

In another aspect of the present invention, dual-port memories (not shown) can be used to replace one or both of the shift register blocks 22,24. The dual-port memories provide similar functionality, i.e. data input or output and data storage as the shift register blocks 22,24. The dual-port memories also have the advantage that a memory cell occupies less chip area than a cell in the shift register blocks 22,24. However, the dual-port memories are limited to horizontal communication between the data input ports 46,48 and output ports 47,49, and cannot be used for data transfer between the PE's. Accordingly, it is advantageous to include at least one shift register block 22,24. Furthermore at the design stage, the dual-port memory must be fixed for data input or for data output since dual-port memory is not bi-directional. In addition, as is apparent to one skilled in the art, shift registers can be clocked at extremely fast rates, thereby providing a high bandwidth.

Accordingly by using the first and second right neighbour tap lines 82,84 and the first and second left neighbour tap lines 86,88 to provide for communication between adjacent PE's in the linear array, the dual-port memories can replace both first and second shift register blocks 22,24

Reference is next made to Fig. 9, which shows a data input memory cell 136 for the dual-port memory. The data cell 136 connects to a data input bus 138 which in turn connects to one of the input-output ports 46,48 (not shown in Fig. 9). As shown in Fig. 9, the data cell 136 also connects to the serial bus 50, thereby allowing data from an external device, i.e. digitizing camera, to be stored in the cell and processed by the PE 2. Once the data bit is processed, the PE 2 can store the processed data bit in cache memory 18 or transfer it to another PE 2 using the PE neighbour taps 86,88,90,92 discussed above, or the PE 2 can write the processed data to dual-port memory as will be discussed below.

As shown in Fig. 9, the data input cell 136 includes an input transistor 140, a data storage transistor 142, an output transistor 144 and a parasitic capacitor 146 for storing the data bit. The capacitance between the gate and the source of the storage transistor 142 forms the parasitic capacitor 146. The input transistor 140 connects the capacitor 146, i.e. gate of the storage transistor 142, to the data input bus 138. By activating a data-in address line 148 on the input transistor 140, the data bit on the bus 138 is stored on the parasitic capacitor 146. To transfer the data bit to the PE 2, via the serial bus 50, the output transistor 144 includes a transfer address line 150 connected to its gate. By addressing the transfer line 150, the output transistor 144 is turned on and the data bit stored on the capacitor 146 is transferred to the serial bus 50 via the output transistor 144. According to the memory bus organization of the PE 2, the data bit once on the serial bus 50 can be written to any destination address in the PE 2, for example, the ALU 14.

Reference is next made to Fig. 10, which shows a data output cell 152 for the dual-port memory. The data cell 152 connects to a data output bus 154 which is connected to one of the output ports 48,49 (not shown). As shown in Fig. 10, the data cell 152 also connects to the serial bus 50, thereby allowing data, which was processed by the PE 2, to be stored in the cell 152 and then outputted on a data output bus 154 to an external device such as a display terminal.

As shown in Fig. 10, the data output cell 152 for the dual-port memory includes an input transistor 156, a data storage transistor 158, and output transistor 160, and a parasitic capacitor 162 for storing the data bit. The capacitance between the gate and the source of the storage capacitor 158 forms the parasitic capacitor 162. The input transistor 156 connects the parasitic capacitor 162 to the serial bus 50. By activating a data transfer address line 164 connected to the gate of the input transistor 156, the data bit on the serial bus 50 is stored on the parasitic capacitor 162. To transfer the data bit to the data output bus 154, the output transistor 160 includes a data out address line 166 connected to its gate. By activating the data out address line 166, the output transistor 160 is turned on and the data bit stored on the capacitor 162 is transferred to the data out bus 154, via the output transistor 160. Once on the data output bus 154, the data bit can be written to an external device such as a display terminal as mentioned above.

In the previous discussion, the memory-bus organization of the device 1 has been illustrated using the serial bus 50. In another aspect of the present invention, a differential bus structure 165, as depicted in Fig. 11, replaces the structure of the serial bus 50. Instead of a single-bit line as for the serial bus 50, the differential bus 165 has a data-bit line 167 and complemented data-bit line 169, i.e. the logical complement of the data-bit line 167.

As shown in Fig. 11 for the cache memory 18, each cell 90 has a first tap 171 into the data-bit line 167 and a second tap 173 into the complemented data-bit line 169. The cache memory 18 also includes additional logic (not shown) for reading from and writing to the complemented data-bit line 169. In this aspect of the present invention, the other logic units (not shown), such as the ALU 14, the multiplier 16, also have corresponding first taps into the data-bit line 167 and second taps into the complemented data-bit line 169, along with additional logic for processing the complemented and non-complemented data from the differential bus 165.

In another aspect of the present invention (not shown), a multi-bit wide bus, e.g. a twelve-bit bus, replaces the serial bus 50. While a twelve-bit wide bus increases the chip area occupied by each PE 2, it significantly increases the bandwidth and processing power of each PE 2. The increased processing power and bandwidth is suitable for applications where large amounts of data must be processed, and in applications where flexibility for processing a variable length data sample is not a design requirement. As is evident to one skilled in the art, for a twelve-bit wide bus, the logic units, such as the ALU 14, the multiplier 16 and cache memory 18, would also have twelve-bit interfaces to the bus.

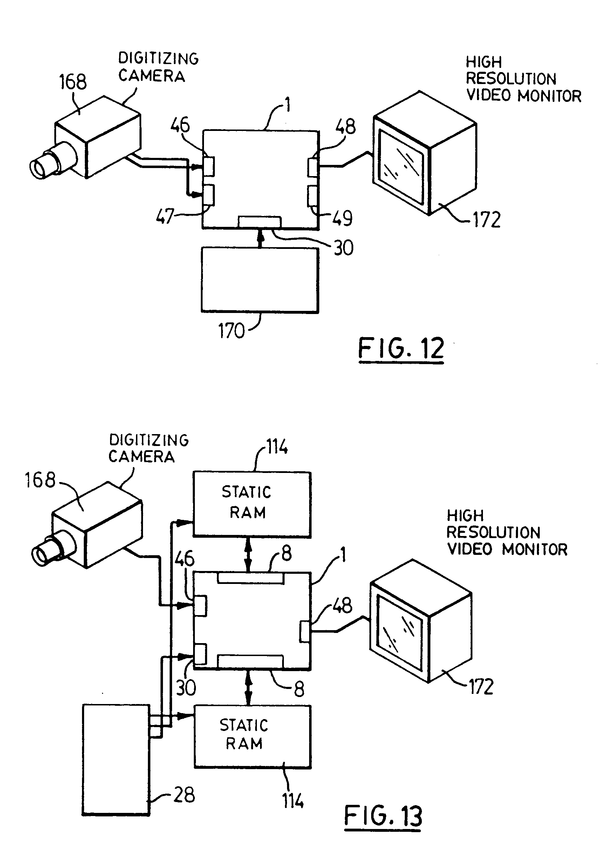

Reference is next made to Fig. 12, which shows the basic configuration or the stand-alone system for video or image processing system. The device 1 receives digital signals/samples, via ports 46,47, from an external device, which can be a digitizing camera 168 or an analogue camera connected to an analogue-to-digital converter (not shown). The inputted digital signals are processed by the device 1 and outputted via the ports 48,49 to an external device such as a high resolution monitor 172. For many video or image processing tasks, such as median filtering, linear filtering, morphological operations, sobel and threshold operations and discrete cosine transforms, the on-chip cache memory 19 together with the storage capacity of the shift registers 22,24 is more than sufficient and the device 1 can be controlled by simple control unit, such as a finite state machine, or by instructions downloaded to the on-chip instruction RAM 32. A bootstrap ROM 170 can be used to download the instructions to the on-chip RAM 32 as part of a power-up sequence for the device 1.

As shown in Fig. 13, the device 1 can be configured with external memory 114. In some image processing applications, such as a motion feature encoder, storage capacity beyond that available in cache memory 19 is necessary to save the frame image. Using the external memory interface discussed above, the device 1 can be interfaced to two high density static RAM chips 114 as shown in Fig. 13. An external controller 28, i.e. microcontroller, provides the control for the device 1 and memory interface 8.

It will be evident to those skilled in the art that other embodiments of the invention fall within its spirit and scope as defined by the following claims.

## Claims

1. A device for digital signal processing comprising:
   (a) a data input port;
   (b) a data output port;
   (c) a linear array of processor elements, each processor element having
      (i) bus means for transferring data within the processor element,
      (ii) a plurality of logic units coupled to said bus means;
   (d) said logic units for each processor element including an arithmetic logic unit (ALU), and communication interface means;
   (e) said communication interface means of at least some of the processor elements including means for receiving data from adjacent processor elements and means for transferring data to adjacent processor elements;
   (f) address/data enable means coupled to said logic units of each processor element for addressing said logic units and for controlling the transfer of data on said bus means; and
   (g) means for coupling said data input port to said communication interface means of one processor element and means for coupling said data output port to said communication interface means of another processor element,
   so that, all data transfer between said processor elements is on said communication interface means, and all data transfer within each processor element is on said bus means.

2. A device as claimed in claim 1, wherein said bus means of each processor element comprises differential bus means and said logic units include means for receiving and transmitting differential bits of data from and to said bus means.

3. A device as claimed in claim 1 or claim 2, wherein said bus means of each processor element comprises bit-wide serial bus means and said logic units include means for receiving and transmitting bit-serial data from and to said bus means.

4. A device as claimed in claim 1, wherein said logic units in each processor element include a multiplier unit.

5. A device as claimed in claim 4, wherein said multiplier unit in each processor element is a serial-to-parallel multiplier, said serial-to-parallel multiplier having a plurality of stages and including a last stage, each said stage being coupled to the next said stage and said last stage being coupled to said bus means.

6. A device as claimed in any preceding claim, wherein said logic units in each processor element include a cache memory, said cache memory having a plurality of cells each coupled to said bus means and to said address/data enable means, so that each cell in said cache memory can read and write data from and to said bus means.

7. A device as claimed in any preceding claim, further including a second data input port, a second data output port, and second communication interface means, said second communication interface means of at least some of the processor elements including means for receiving data from adjacent processor elements and means for transferring data to adjacent processor elements, and means for coupling said second data input port to said second communication interface means of one processor element and means for coupling said second data output port to said second communication interface means of another processor element.

8. A device as claimed in any preceding claim, wherein said logic units of each processor element include means for interfacing to an external memory device, said means for interfacing to an external memory having at least one register coupled to said bus means and to said address/data enable means, so that each processor element in said linear array can receive and transmit data from and to an external memory device.

9. A device as claimed in any preceding claim, wherein means or said means of said logic units for interfacing to an external memory device, includes or further includes multiplexing means for selecting one from a plurality of said processor elements to interface with an external memory device, and said multiplexing means being connected to said address/data enable means.

10. A device as claimed in any preceding claim, wherein said communication interface means comprise bi-directional shift registers.

11. A device as claimed in any one of claims 1 to 9, wherein said communication interface means comprise dual-port memory.

12. A device as claimed in any preceding claim, wherein said ALU includes a plurality of registers each having at least one output and at least one input both coupled to said bus means and to said address/data enable means, adder means for adding a plurality of data bits, said adder means having a sum unit coupled to said bus means and to said address/data enable means and connected to the outputs of said registers, said adder means also having a carry unit coupled to said bus means and to said address/data enable means and connected to the outputs of said registers.

13. A device as claimed in claim 12, wherein said plurality of registers comprise a first register, a second register, and a third register, and said third register includes an input connected to the output of said carry unit.

14. A device as claimed in claim 13, wherein said ALU includes a Boolean logic unit having an output coupled to said bus means and being coupled to said address/data enable means and having inputs connected to the outputs of said first, second, and third registers.

15. A device as claimed in claim 14, wherein said ALU includes a plurality of right neighbour tap lines coupled to said bus means and to said address/data enable means, and a plurality of left neighbour tap lines coupled to said bus means and to said address/data enable means, so that a processor element can transfer data to and from neighbouring processor elements in said linear array.

16. A device as claimed in claim 15, wherein said ALU includes a first right neighbour tap line and a second right neighbour tap line, and a first left neighbour tap line and a second left neighbour tap line, so that a processor element using said bus means and said address/data enable means can transfer data to and from its first and second right neighbours and to and from its first and second left neighbour processor elements in said linear array.

17. A device as claimed in claim 16, wherein said registers include complemented inputs coupled to said bus means and non-complemented inputs coupled to said bus means.

18. A device as claimed in any preceding claim, wherein said device is fabricated on a semiconductor substrate.

19. A device as claimed in claim 18, wherein said semiconductor substrate includes,

(a) a or said cache memory integrated into said semiconductor substrate;

(b) an upper said processor element structure integrated into said semiconductor substrate;

(c) a lower said processor element structure integrated into said semiconductor substrate; and

(d) instruction/address controller means including a decoder logic unit integrated into said semiconductor substrate,

so that, the device is fabricated on said semiconductor substrate as a single integrated circuit chip.

20. A device as claimed in claim 19, wherein said cache memory structure has four sides, being generally rectangular in shape and being integrated into a centre portion of said semiconductor substrate, and said upper processor element structure being integrated into a portion of said semiconductor substrate adjacent to one side of said cache memory structure, said lower processor element structure being integrated into a portion of said semiconductor substrate adjacent to the second side of said cache memory structure, and said instruction/controller structure being integrated into a portion of said semiconductor substrate adjacent to the third side of said cache memory structure.

21. A device as claimed in claim 20, wherein said first and second sides are on opposing sides of said cache memory structure, and said third side extends between said first and second sides, so that the integrated circuit aspect ratio on said semiconductor substrate is near unity.

22. A device as claimed in claim 20 or 21, wherein said cache memory structure includes even columns, each even column having a plurality of memory cells, and odd columns, each odd column having a plurality of memory cells, and said upper processor element structure being coupled to said even columns of said cache memory structure, and said lower processor element structure being coupled to said odd columns of said cache memory structure.

23. A device as claimed in any one of claims 19 to 22, further including a bus structure coupling said upper processor element structure to said lower processor element structure, so that said upper processor element structure and said lower processor element structure form a continuous linear array of processor elements.

24. A device as claimed in any preceding claim, including communication enable means associated with at least some of said processor elements for selectively enabling and disabling such associated processor elements from receiving data from adjacent processor elements and from transferring data to adjacent processor elements.

25. A device as claimed in claim 24, wherein said communication enable means include state register means for storing the enable state of said associated processor elements and switching means coupled to said state register means and to said first and second communication interface means of said associated processor elements for selectively enabling and disabling such associated processor elements from receiving data from adjacent processor elements and from transferring data to adjacent processor elements.

26. A device as claimed in claim 25, wherein said state register means include means for receiving enable state data for said associated processor elements from an external controller.

27. A device as claimed in claim 26, wherein said state register means include storage means for storing more than one set of said enable state data for said associated processor elements.

28. A device as claimed in claim 27, wherein said storage means comprise a plurality of data registers.

29. A device as claimed in claim 27, wherein said storage means comprise an electrically erasable programmable read only memory.

30. A device as claimed in any one of claims 25 to 29, wherein said switching means include a first control switch for enabling and disabling said associated processor elements from transferring data to adjacent processor elements, and a second control switch for enabling and disabling said associated processor elements from receiving data from adjacent processor elements, and said first control switch and said second control switch both being connected to said state register means and to said first and second communication interface means of said associated processor elements.

31. A device as claimed in any preceding claim, further including controller interface means coupled to said address/data enable means for interfacing to an external controller.

32. A device as claimed in claim 31, wherein said controller interface means include storage means for storing control instructions received from said external controller.

33. A device as claimed in claim 32, wherein said storage means comprise a random access memory.

34. A device as claimed in claim 32 or 33, wherein said storage means comprise an electrically erasable programmable read only memory.

FIG. 1

FIG. 2

FIG. 5

FIG. 4

FIG. 3

FIG. 6

PE$_n$    PE$_{n+7}$ PE$_m$    PE$_{m+7}$

FIG.9

FIG.10

FIG. 7

EP 0 463 721 A2

FIG. 8

FIG. 8A

FIG. 11

DIGITIZING
CAMERA

HIGH
RESOLUTION
VIDEO MONITOR

168

46

1

48

47

49

30

172

170

FIG. 12

DIGITIZING
CAMERA

114

STATIC
RAM

HIGH
RESOLUTION
VIDEO MONITOR

168

46

8

1

48

30

8

172

STATIC
RAM

28

STATIC
RAM

114

FIG. 13